# EUROPEAN PATENT SPECIFICATION

(11) **EP 2 989 166 B1**
(45) Date of publication and mention of the grant of the patent: **08.08.2018**
(21) Application number: 14816782.8
(22) Date of filing: 19.06.2014
(51) Int. Cl.: C08L 69/00, C09K 21/12, G03G 21/16, C08L 1/02, C08K 5/52, C08L 51/00, C08L 55/02

(54) **FLAME RETARDANT COMPOSITION AND MOLDED ARTICLE INCLUDING THE SAME**
FLAMMHEMMENDE ZUSAMMENSETZUNG UND FORMARTIKEL DAMIT
COMPOSITION IGNIFUGE ET ARTICLE MOULÉ COMPRENANT UNE TELLE COMPOSITION

(30) Priority: 28.06.2013 JP 2013136156
(43) Date of publication of application: 02.03.2016
(73) Proprietor: Canon Kabushiki Kaisha, Tokyo 146-8501 (JP)
(72) Inventor: KOMURO, Takeshi, Tokyo 146-8501 (JP); MATSUDA, Katsuhiro, Tokyo 146-8501 (JP); MIURA, Toshinari, Tokyo 146-8501 (JP)
(74) Representative: WESER & Kollegen
(86) International application number: PCT/JP2014/066918
(87) International publication number: WO 2014/208633

(56) References cited:
- EP-A1- 2 444 457
- JP-A- 2005 179 597
- JP-A- 2006 111 858
- JP-A- 2007 231 034
- JP-A- 2009 001 012
- JP-A- 2009 114 458
- JP-A- 2010 260 999
- JP-A- 2011 105 820
- US-A1- 2010 273 922
- DATABASE WPI Week 201167 Thomson Scientific, London, GB; AN 2011-M61645 XP002762832, & WO 2011/122646 A1 (FUJI FILM CO LTD) 6 October 2011 (2011-10-06)
- DATABASE WPI Week 201248 Thomson Scientific, London, GB; AN 2012-H58517 XP002762833, & JP 2012 126841 A (UMG ABS KK) 5 July 2012 (2012-07-05)
- DATABASE WPI Week 201281 Thomson Scientific, London, GB; AN 2012-Q79898 XP002762834, & JP 2012 236906 A (NISSAN MOTOR CO LTD) 6 December 2012 (2012-12-06)

## Description

### Technical Field

The present invention relates to a flame retardant composition.

### Background Art

In recent years, in consideration of emission reduction of carbon dioxide and usage reduction of fossil resources which might be depleted in near future, research and development of low environmental load resins has been actively carried out using bio-renewable raw materials, and in particular, attention has been paid to the use of celluloses which occur abundantly in nature.

However, when a cellulose is compounded with a resin, although the heat resistance and the rigidity of the resin are improved, the impact strength and the flame retardancy thereof are remarkably degraded. Hence, a method for improving the impact strength and the flame retardancy has been pursued.

In order to solve the problem described above, PTL 1 has disclosed a method in which after the flame retardancy is imparted to natural fibers using boric acid or a boric acid compound, the natural fibers are compounded with a resin to form a flame retardant resin composition while a high heat resistance and a high rigidity are maintained.
According to PTL 1, an attempt was performed to improve the flame retardancy and mechanical properties, such as the impact strength and the heat resistance, of a cellulose composite thermoplastic resin. However, the flame retardancy of the disclosed resin composition was rated as UL-94 V-1, and a high flame retardancy (UL-94 5VB) required, for example, for housings of office machines could not be obtained.
PTL 2 discloses a resin composition comprising (A) a polylactic acid resin, (B) 75-10% by weight of a resin selected from cellulose esters, (C) 25-90% by weight of an aromatic polycarbonate resin, and 1-50 parts by weight of a compatibilizer per 100 parts by weight total of at least one selected from (A) and (B) and component (C). The resin composition further comprises a flame retardant, a fluorine-based compound, and an epoxy compound. PTL 3 discloses a resin composition containing a cellulose ester; a thermoplastic resin having an aromatic ring on the main chain; a low-molecular weight plasticizer formed from a compound with a molecular weight of 450 or less; an oligomer plasticizer formed from a compound with a mass average molecular weight of 500 - 5000; and a phosphorus-based flame retardant formed from a phosphorus-containing compound with a molecular weight of 400 - 800. PTL 4 discloses a reinforced thermoplastic resin composition containing a polycarbonate resin (A) in an amount of 50 to 90 mass%, a grafted copolymer (B) in an amount of 10 to 50 mass%, wherein the total of the component (A) and the component (B) is 100 mass%, and, with respect to total 100 parts by mass of the polycarbonate resin (A) and the grafted copolymer (B), an inorganic filler in an amount of 11.2 to 33.8 parts, a sulfonic acid metal salt in an amount of 0.4 to 10 parts by mass; and a phosphoric acid ester flame retardant in an amount of 1 to 25 parts by mass. PTL 5 discloses a resin composition including 30-80 mass% of a thermoplastic resin, 15-60 mass% of cellulose fiber, 2-20 mass% of a water-soluble resin, and 0.5-15 mass% of a modified olefin resin, wherein the total of the aforementioned components is 100 mass%.

### Citation List

### Patent Literature

PTL 1 Japanese Patent Laid-Open No. 2007-231034
PTL 2 JP 2006/111858
PTL 3 WO 2011 /122646 A1
PTL 4 JP 2012/126841
PTL 5 JP 2012/236906

### Summary of Invention

Accordingly, the present invention provides a flame retardant composition having a high flame retardancy and high mechanical properties, the flame retardant composition including a thermoplastic resin, a cellulose, a rubber having a siloxane bond, and a flame retardant agent.

Hence, the present invention relates to a flame retardant composition as defined in claim 1, a molded article as defined in claim 10, an image forming apparatus as defined in claim 11 and a method defined in claim 12. The other claims relate to further developments.

Further features of the present invention will become apparent from the following description of exemplary embodiments with reference to the attached drawings.

### Brief Description of Drawings

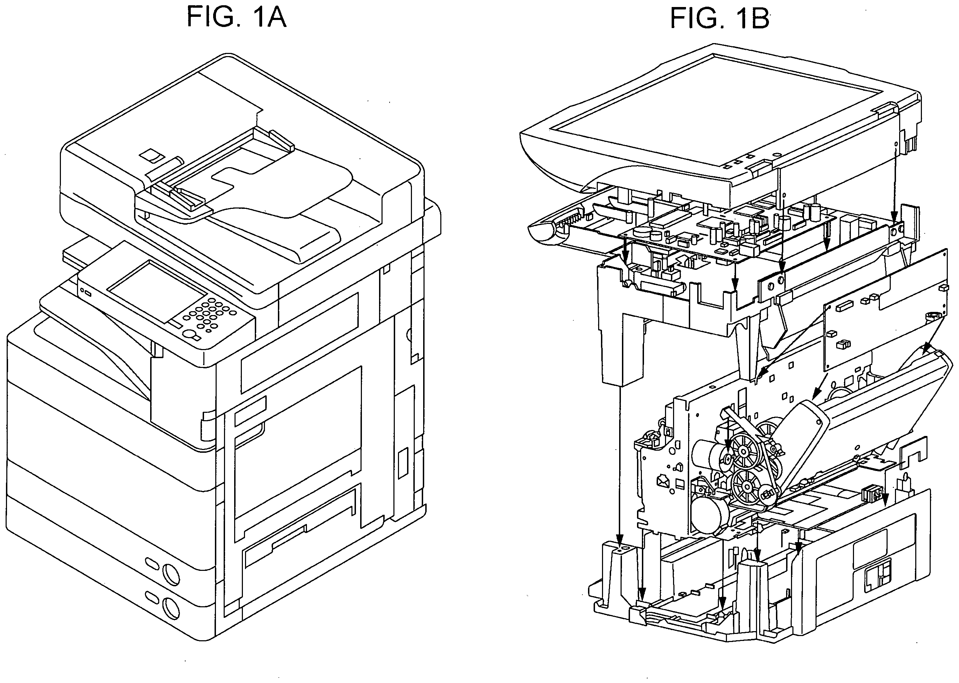

Fig. 1A is an external view showing one example of an image forming apparatus according to an embodiment.
Fig. 1B is a schematic view showing the inside of one example of the image forming apparatus according to the embodiment.

### Description of Embodiments

A flame retardant composition of the present invention includes a thermoplastic resin, a cellulose, a rubber having a siloxane bond, and a flame retardant agent. Hereinafter, the thermoplastic resin is called an A component, the cellulose is called a B component, the rubber having a siloxane bond is called a C component, and the flame retardant agent is called a D component in some cases.

The flame retardant composition of the present invention has a high flame retardancy and is rated as UL-94 5VB.

The flame retardant composition of the present invention includes a thermoplastic resin. When the weight of the flame retardant composition is set to 100 percent by weight, the content of the thermoplastic resin is preferably 50 to 90 percent by weight.

As the thermoplastic resin of the present invention, for example, a polyethylene (PE), a polypropylene (PP), a polystyrene (PS), a polycarbonate (PC), a poly(ethylene terephthalate) (PET), a poly(butylene terephthalate) (PBT), a poly(lactic acid) (PLA), a poly(butylene succinate) (PBS), an acrylonitrile-butadiene-styrene copolymer compound (ABS), a styrene-acrylonitrile copolymer compound (SAN), and a polymer alloy, such as PC/ABS or PC/SAN, may be mentioned. Those resins may be used alone, or at least two types thereof may be used in combination. In particular, PC/ABS and PC/SAN are preferable.

The flame retardant composition of the present invention includes a cellulose. When the weight of the flame retardant composition is set to 100 percent by weight, the content of the cellulose is preferably 1 to 30 percent by weight and more preferably 3 to 15 percent by weight.

When the content of the cellulose is 30 percent by weight or less, the flame retardant composition can obtain sufficient impact strength and flame retardancy.

As the cellulose of the present invention, a compound primarily formed of a cellulose may be used, and any compound extracted from a plant or formed by a chemical synthesis may be used. In addition, the cellulose is not limited, for example, by the manufacturing method, the shape, and the degree of crystallization thereof. As particular examples of the cellulose, for example, there may be mentioned bamboo powder, wood powder, kenaf, flax, cotton, jute, used paper, wood pulp, microcrystalline cellulose, and microfibrillated cellulose.

Those celluloses mentioned above may be used alone, or at least two types thereof may be used in combination. In particular, a cellulose having a fiber shape and a fiber diameter of 100 µm or less is preferably used. When the fiber diameter is 100 µm or less, a molded article may be provided without degrading the appearance thereof.

In addition, a known surface treatment may be performed on the celluloses mentioned above. As a surface treatment method, for example, a sizing treatment, a silane coupling treatment, or an esterification treatment may be mentioned. Among those mentioned above, a sizing treatment and a silane coupling treatment are preferable.

The flame retardant composition of the present invention includes a rubber having a siloxane bond. When the weight of the flame retardant composition is set to 100 percent by weight, the content of the rubber having a siloxane bond is preferably 3 to 20 percent by weight and more preferably 5 to 15 percent by weight.

When the content of the rubber having a siloxane bond is set to 3 to 20 percent by weight, a high impact strength and a high flame retardancy can be obtained.

The rubber having a siloxane bond of the present invention is a rubber having a siloxane bond in a polymer structure. A rubber having a high affinity for a thermoplastic resin is preferable, and as a particular example, a silicone rubber may be mentioned, or in more particular, a silicone-acrylic-based core-shell rubber may be mentioned.

The core-shell rubber is a rubber having a core portion and a shell portion. The silicone-acrylic-based core-shell rubber has, for example, a silicone-acrylic composite rubber as the core portion and a graft layer of a vinyl-based polymer as the shell portion.

The flame retardant composition of the present invention includes a flame retardant agent. When the weight of the flame retardant composition is set to 100 percent by weight, the content of the flame retardant agent is preferably 5 to 20 percent by weight.

When the content of the flame retardant agent is set to 5 to 20 percent by weight, a high impact strength and a sufficient flame retardancy can be obtained.

As the flame retardant agent of the present invention, an organic flame retardant agent, an inorganic flame retardant agent, or a mixture therebetween may be used. A phosphorus-based flame retardant agent is preferable. As particular examples thereof, for example, there may be mentioned a phosphate ester, such as triphenyl phosphate, tricresyl phosphate, or trixylyl phosphate; or a condensed phosphate ester, such as resorcinol bis(diphenyl phosphate), bisphenol A bis(diphenyl phosphate), or resorcinol bis(di-2,6-xylyl phosphate). As a commercially available condensed phosphate ester, for example, CR-733S, CR-741, and PX-200, each manufactured by Daihachi Chemical Industry Co., Ltd., may be mentioned.

The flame retardant composition of the present invention may further include an anti-dripping agent, a pigment, a thermal stabilizer, an antioxidant, an inorganic filler, a weather resistant agent, a lubricant, a mold-releasing agent, an antistatic agent, and the like as long as the properties of the flame retardant composition are not impaired. When the weight of the flame retardant composition is set to 100 percent by weight, 20 percent by weight or less of the above additives may be contained.

The flame retardant composition of the present invention may also include a fluorinated compound. The fluorinated compound functions as an anti-dripping agent. Although the type of fluorinated compound is not particularly limited, because of good handling properties and dispersibility, a polytetrafluoroethylene (hereinafter referred to as "PTFE"), a PTFE modified with another resin, or a PTFE-containing mixture is preferably used.

When the weight of the flame retardant compound is set to 100 percent by weight, the content of the fluorinated compound (E component) included in the flame retardant composition of this embodiment is preferably 0.1 to 1.0 percent by weight. When the content is less than 0.1 percent by weight, a resin is melted and dripped from a flame-retardant test piece when a flame is brought into contact therewith, and as a result, the flame retardancy is difficult to be rated as UL-94 5BV.

In addition, in consideration of the influence on the environment, when the total flame retardant composition of this embodiment is set to 100 percent by weight, the content of the PTFE included in the composition is preferably 0.5 percent by weight or less.

For example, in the case of a fluorinated compound containing 50 percent by weight of a PTFE, when the weight of the flame retardant composition is set to 100 percent by weight, the content of the fluorinated compound is preferably set to 1.0 percent by weight or less.

Although the type of fluorinated compound (E component) used in the present invention is not particularly limited, since being excellent in handling properties and dispersibility, a polytetrafluoroethylene (hereinafter referred to as "PTFE"), a PTFE modified with another resin, or a PTFE-containing mixture is preferably used. In particular, Metablen A-3800 (trade name, manufactured by Mitsubishi Rayon Co. Ltd.), which is an acrylic resin-modified PTFE, may be mentioned.

As for the weight ratio of the flame retardant composition of the present invention, the ratio between charge amounts may be regarded as the composition ratio of the composition. Alternatively, by the measurement of a molded article by instrumental analysis using NMR, pyrolytic GC/MS, or the like, the composition ratio of the composition may also be measured.

A molded article including the flame retardant composition of the present invention may have a desired shape by molding. Although a molding method is not particularly limited, for example, a known technique, such as extrusion molding or injection molding, may be used. In particular, extrusion molding or injection molding is preferably used.

The resin included in the flame retardant composition of this embodiment may be a recovered resin. When a recovered resin is used, the flame retardant composition may be called a recycle resin. When the recycle resin is manufactured, a cellulose, a rubber having a siloxane bond, and a flame retardant agent may be added to a prepared resin.

Although a mixing method used for the addition is not particularly limited, melt-kneading performed by a kneading machine is preferable.

The recovered resin may be obtained from a recovered molded article. As the recovered molded articles, for example, housings of image forming apparatuses, camera components, housings and internal components of personal computers, housings and internal components of television sets, and water bottles may be mentioned.

The molded articles of this embodiment may be used for components, each of which is required to have flame retardancy, of image forming apparatuses, such as a copying machine, a laser beam printer, and an ink jet printer. In particular, for example, a housing accommodating a photosensitive member, a component provided around a fixing device, and a component provided around a power source may be mentioned.

In addition, the molded article may also be used as an exterior member as long as the design characteristics are not adversely influenced.

As the image forming apparatus, for example, an apparatus shown in Figs. 1A and 1B may be mentioned. Fig. 1A is an external view showing one example of the image forming apparatus. The exterior members are shown in Fig. 1A. Fig. 1B is a schematic view showing the inside of one example of the image forming apparatus. The internal components are shown in Fig. 1B.

### Examples

### Example 1

PC/ABS (Cycoloy C1200HF manufactured by SABIC Innovative Plastics) was dried at 80°C for 6 hours.

PC/ABS (808 g), a silicone-acrylic-based rubber (50 g, Metablen SX-005, manufactured by Mitsubishi Rayon Co. Ltd.), a condensed phosphate ester-based flame retardant agent (100 g, PX-200, manufactured by Daihachi Chemical Industry Co., Ltd.), an anti-dripping agent (10 g, Metablen A-3800, manufactured by Mitsubishi Rayon Co. Ltd.), and an antioxidant (2 g, Irganox B220, manufactured by BASF) were weighed and mixed together.

Next, melt-kneading was performed at a cylinder temperature of 240°C to 250°C by a biaxial extruder (Laboplasto Mill, manufactured by Toyo Seiki Seisaku-sho, Ltd.). A resin extruded from a front end of the extruder is cut into pellets, so that pellets of the resin were obtained. The pellets thus obtained were dried at 80°C for 6 hours.

Subsequently, 970 g of the pellets described above and 30 g of a cotton powder processed with a silane coupling agent (Silquest A-1110, manufactured by Momentive Performance Materials, Inc.,) to have a content of 1 percent by weight were weighed and mixed together.

Next, melt-kneading was performed at a cylinder temperature of 200°C to 210°C by a biaxial extruder (Laboplasto Mill, manufactured by Toyo Seiki Seisaku-sho, Ltd.). A resin extruded from a front end of the extruder is cut into pellets, so that pellets of the resin were obtained.

After the pellets thus obtained were dried at 80°C for 6 hours, by using an injection machine (SE18DU, manufactured by Sumitomo Heavy Industries, Ltd:), multipurpose test pieces (each having a size of 80 mm×10 mm×t (thickness) 4 mm) were molded at a cylinder temperature of 210°C to 230°C and at a mold temperature of 60°C, and flame-retardant test pieces (each having a size of 125 mm×12.5 mm×t 2 mm) were molded at a cylinder temperature of 210°C to 230°C and at a mold temperature of 40°C.

### Examples 2 to 9

Raw materials were mixed together at a mass ratio as shown in Table 1. Except for that described above, multipurpose test pieces and flame-retardant test pieces were molded using a resin in a manner similar to that in Example 1.

### Comparative Examples 1 to 3

Raw materials were mixed together at a mass ratio as shown in Table 1. Except for that described above, multipurpose test pieces and flame-retardant test pieces were molded using a resin in a manner similar to that in Example 1.

As the materials shown in Table 1, the following materials were used.
- PC/ABS "Cycoloy C1200HF" manufactured by SABIC Innovative Plastics.
- Microcrystalline cellulose "Ceolus ST-100" manufactured by Asahi Kasei Chemicals Corporation.
- Silane coupling agent "Silquest A-1110" manufactured by manufactured by Momentive Performance Materials, Inc.
- Sizing agent "SIZEPINE K-931" manufactured by Arakawa Chemical industries, Ltd.
- Silicone-acrylic-based rubber "Metablen SX-005" manufactured by Mitsubishi Rayon Co. Ltd.
- Condensed phosphate ester-based flame retardant agent "PX-200" manufactured by Daihachi Chemical Industry Co., Ltd.
- MBS-based rubber "Metablen C-223A" manufactured by Mitsubishi Rayon Co. Ltd.
- Talc "High Micron HE5" manufactured by Takehara Chemical Industry Co., Ltd.
- Anti-dripping agent "Metablen A-3800" manufactured by Mitsubishi Rayon Co. Ltd.
- Antioxidant "Irganox B220" manufactured by BASF.

In addition, as the evaluation, the following tests were performed.

### (1) Flame retardancy

Test method: In accordance with the 5V test of UL-94 (125 mm vertical burning test)
Sample shape: Flame-retardant test piece (125 mm×12.5 mm×t 2 mm)

### (2) Charpy impact strength

Test method: In accordance with JIS K 7111
Sample shape: Multipurpose test piece (80 mm×10 mm×t 4 mm)
Notch machining: The type A notch is formed using a notching tool A-3 (manufactured by Toyo Seiki Seisaku-sho, Ltd.).
Measurement device: Digital impact test machine DG-UB (manufactured by Toyo Seiki Seisaku-sho, Ltd.)

### (3) Deflection temperature under load

Test method: In accordance with JIS K 7191-2
Sample shape: Multipurpose test piece (80 mm×10 mm×t 4 mm)
Placement method: flat placement
Flexural stress: 1.80 MPa
Span length: 64 mm
Temperature rise rate: 120°C/h
Heat medium: silicone oil
Measurement device: HDT/VSPT test device TM-4126 (manufactured by Ueshima Seisakusho Co., Ltd.)

The mixing ratio and the evaluation results of the flame retardancy, the Charpy impact strength, the deflection temperature under load of each of Examples 1 to 9 and Comparative Examples 1 to 3 are shown in Table 1.

As apparent from Table 1, when PC/ABS, the cellulose, the rubber having a siloxane bond, and the flame retardant agent are blended together, a flame retardancy of 5VB, a Charpy impact strength of 5 kJ/m² or more, and a deflection temperature under load of 70°C or more were obtained as the evaluation results.

On the other hand, when the rubber having a siloxane bond is not used, the 5VB test was not passed, and the Charpy impact strength was also low.

**Table 1-1**

| | | | Example 1 | Example 2 | Example 3 | Example 4 | Example 5 |
|---|---|---|---|---|---|---|---|
| (A) Thermoplastic Resin (wt%) | PC/ABS | Cycoloy C1200HF | 81.7 | 78.7 | 73.7 | 64.2 | 64.2 |
| (B) Cellulose (wt%) | Cotton Powder | No Surface Treatment | - | - | - | - | - |
| | | SIZEPINE K-9314 Content: 4 wt% | - | - | - | 10.5 | - |
| | | SIZEPINE K-9314 Content: 8 wt% | - | - | - | - | - |
| | | Silquest A-1110 Content: 1 wt% | 3.0 | 6.1 | 6.1 | - | - |
| | ST-100 | No Surface Treatment | - | - | - | - | - |
| | | SIZEPINE K-9314 Content: 4 wt% | - | - | - | - | 10.5 |
| (C) Rubber Having Siloxane Bond (wt%) | Metablen SX-005 | | 5.1 | 5.1 | 10.1 | 10.1 | 10.1 |
| (D) Flame Retardant Agent (wt%) | PX-200 | | 10.1 | 10.1 | 10.1 | 15.2 | 15.2 |
| Total (wt%) | | | 100 | 100 | 100 | 100 | 100 |
| Additive (wt%) | MBS-based Rubber | Metablen C223A | - | - | - | - | - |
| | Talc | High Micron HE5 | - | - | - | - | - |
| | Anti-Dripping Agent | Metablen A-3800 | 1.0 | 1.0 | 1.0 | 1.0 | 1.0 |
| | Antioxidant | Irganox B220 | 0.2 | 0.2 | 0.2 | 0.2 | 0.2 |
| Total (wt%) | | | 1.2 | 1.2 | 1.2 | 1.2 | 1.2 |
| Experimental Results | 5V Test | | OK | OK | OK | OK | OK |
| | Charpy Impact Strength (kJ/m²) | | 7.5 | 6.0 | 6.4 | 5.9 | 5.7 |
| | Deflection Temperature under Load (°C) | | 85 | 85 | 83 | 72 | 71 |

**Table 1-2**

| | | | Example 6 | Example 7 | Example 8 | Example 9 | Comparative Example 1 | Comparative Example 2 | Comparative Example 3 |
|---|---|---|---|---|---|---|---|---|---|
| (A) Thermoplastic Resin (wt%) | PC/ABS | Cycoloy C1200HF | 71.5 | 68.1 | 68.6 | 70.1 | 74.7 | 74.7 | 71.8 |
| (B) Cellulose (wt%) | Cotton Powder | No Surface Treatment | - | - | 6.1 | - | 10.1 | - | - |
| | | SIZEPINE K-9314 Content: 4 wt% | - | - | - | - | - | - | - |
| | | SIZEPINE K-9314 Content: 8 wt% | 3.2 | 6.6 | - | - | - | - | - |
| | | Silquest A-1110 Content: 1 wt% | - | - | - | 3.2 | - | - | - |
| | ST-100 | No Surface Treatment | - | - | - | - | - | 10.1 | 11.3 |
| | | SIZEPINE K-9314 Content: 4 wt% | - | - | - | - | - | - | - |
| (C) Rubber Having Siloxane Bond (wt%) | Metablen SX-005 | | 10.1 | 10.1 | 10.1 | 10.7 | - | - | - |
| (D) Flame Retardant Agent (wt%) | PX-200 | | 15.2 | 15.2 | 15.2 | 16.0 | 15.2 | 15.2 | 16.9 |
| Total (wt%) | | | 100 | 100 | 100 | 100 | 100 | 100 | 100 |
| Additive (wt%) | MBS-based Rubber | Metablen C223A | - | - | - | - | - | - | 10 |
| | Talc | High Micron HE5 | - | - | - | 5.0 | - | - | - |
| | Anti-in g Agent | Metablen A-3800 | 1.0 | 1.0 | 1.0 | 1.0 | 1.0 | 1.0 | 1.0 |
| | Antioxidant | Irganox B220 | 0.2 | 0.2 | 0.2 | 0.2 | 0.2 | 0.2 | 0.2 |
| Total (wt%) | | | 1.2 | 1.2 | 1.2 | 6.2 | 1.2 | 1.2 | 11.2 |
| Experimental Results | 5V Test | | OK | OK | OK | OK | NG | NG | NG |
| | Charpy Impact Strenogth (kJ/m²) | | 9.5 | 7.9 | 5.9 | 5.5 | 3.2 | 3.1 | 5.4 |
| | Deflection Temperature under Load (°C) | | 72 | 72 | 73 | 74 | 77 | 76 | 72 |

A flame retardant composition having a low environment load, a high flame retardancy, and high mechanical properties may be used as a molding material for office machine housings, electric/electronic components, automobile components, building components, and the like.

According to the present invention, since including a thermoplastic resin, a cellulose, a rubber having a siloxane bond, and a flame retardant agent, a flame retardant composition having a high flame retardancy and high mechanical properties can be provided. In addition, a molded article having a high flame retardancy can be provided using the flame retardant composition described above.

While the present invention has been described with reference to exemplary embodiments, it is to be understood that the invention is not limited to the disclosed exemplary embodiments.

## Claims

1. A flame retardant composition comprising:
a thermoplastic resin;
a cellulose; and
a flame retardant agent;
wherein when the weight of the flame retardant composition is set to 100 percent by weight,
the content of the thermoplastic resin is 50 to 90 percent by weight,
the content of the cellulose is 1 to 30 percent by weight,
and
the content of the flame retardant agent is 5 to 20 percent by weight;
**characterized by** further comprising
a rubber having a siloxane bond, wherein, when the weight of the flame retardant composition is set to 100 percent by weight, the content of the rubber having a siloxane bond is 3 to 20 percent by weight.

2. The flame retardant composition according to Claim 1,
wherein a surface of the cellulose is treated by a silane coupling treatment.

3. The flame retardant composition according to Claim 1 or 2,
wherein when the weight of the flame retardant composition is set to 100 percent by weight, the content of the cellulose is 3 to 15 percent by weight.

4. The flame retardant composition according to any one of Claims 1 to 3,
wherein when the weight of the flame retardant composition is set to 100 percent by weight, the content of the rubber having a siloxane bond is 5 to 15 percent by weight.

5. The flame retardant composition according to any one of Claims 1 to 4,
wherein the rubber having a siloxane bond is a silicone-acrylic-based core-shell rubber, and preferably is a silicone-acrylic-based core-shell rubber that has a silicone-acrylic composite rubber as the core portion and a graft layer of a vinyl-based polymer as the shell portion.

6. The flame retardant composition according to any one of Claims 1 to 5,
wherein the thermoplastic resin includes at least one of PC/ABS and PC/SAN.

7. The flame retardant composition according to any one of Claims 1 to 6,
further comprising a fluorinated compound,
wherein when the weight of the flame retardant composition is set to 100 percent by weight, the content of the fluorinated compound is 0.1 to 1.0 percent by weight.

8. The flame retardant composition according to any one of Claims 1 to 7,
wherein the flame retardant composition is rated as UL-94 5VB.

9. The flame retardant composition according to any one of Claims 1 to 8,
wherein the thermoplastic resin is a recovered resin.

10. A molded article obtained by molding the flame retardant composition according to any one of Claims 1 to 9.

11. An image forming apparatus comprising:
a photosensitive member; and
a housing accommodating the photosensitive member,
wherein the housing includes the molded article according to Claim 10.

12. A method for manufacturing a flame retardant composition, the method comprising:
mixing a thermoplastic resin, a cellulose, and a flame retardant agent,
wherein the mixing is performed so that, when the weight of the flame retardant composition is set to 100 percent by weight, the content of the thermoplastic resin is 50 to 90 percent by weight, the content of the cellulose is 1 to 30 percent by weight, and the content of the flame retardant agent is 5 to 20 percent by weight;
**characterized by**
further mixing a rubber having a siloxane bond with the thermoplastic resin, the cellulose and the flame retardant agent, wherein the mixing is performed so that, when the weight of the flame retardant composition is set to 100 percent by weight, the content of the rubber having a siloxane bond is 3 to 20 percent by weight.

13. The method for manufacturing a flame retardant composition according to Claim 12,
further comprising mixing a fluorinated compound with the thermoplastic resin, the cellulose, the rubber having a siloxane bond, and the flame retardant agent,
wherein when the weight of the flame retardant composition is set to 100 percent by weight, the mixing is performed so that the content of the fluorinated compound in the flame retardant composition is 0.1 to 1.0 percent by weight.

14. The method for manufacturing a flame retardant composition according to Claim 12 or 13,
wherein the mixing of the thermoplastic resin, the cellulose, the rubber having a siloxane bond, and the flame retardant agent is melt-kneading performed by a kneading machine.

15. A method for manufacturing a molded article, the method comprising:
preparing a flame retardant composition; and
molding the flame retardant composition,
wherein the flame retardant composition is manufactured by the method for manufacturing a flame retardant composition according to any one of Claims 12 to 14.

16. The method for manufacturing a molded article according to Claim 15,
wherein the molding is extrusion molding or injection molding.

## Patentansprüche

1. Flammhemmende Zusammensetzung, umfassend:
ein thermoplastisches Harz,
eine Cellulose, und
ein flammhemmendes Mittel;
wobei, wenn das Gewicht der flammhemmenden Zusammensetzung als 100 Gewichtsprozent festgelegt wird,
der Gehalt des thermoplastischen Harzes 50 bis 90 Gewichtsprozent beträgt,
der Gehalt der Cellulose 1 bis 30 Gewichtsprozent beträgt,
und
der Gehalt des flammhemmenden Mittels 5 bis 20 Gewichtsprozent beträgt;
**dadurch gekennzeichnet, dass** die Zusammensetzung ferner umfasst:
ein Gummi mit einer Siloxanbindung, wobei, wenn das Gewicht der flammhemmenden Zusammensetzung als 100 Gewichtsprozent festgelegt wird, der Gehalt des Gummis mit einer Siloxanbindung 3 bis 20 Gewichtsprozent beträgt.

2. Flammhemmende Zusammensetzung nach Anspruch 1,
wobei eine Oberfläche der Cellulose durch eine Silan-Bindungsbehandlung behandelt wird.

3. Flammhemmende Zusammensetzung nach Anspruch 1 oder 2,
wobei, wenn das Gewicht der flammhemmenden Zusammensetzung als 100 Gewichtsprozent festgelegt wird, der Gehalt der Cellulose 3 bis 15 Gewichtsprozent beträgt.

4. Flammhemmende Zusammensetzung nach einem der Ansprüche 1 bis 3,
wobei, wenn das Gewicht der flammhemmenden Zusammensetzung als 100 Gewichtsprozent festgelegt wird, der Gehalt des Gummis mit einer Siloxanbindung 5 bis 15 Gewichtsprozent beträgt.

5. Flammhemmende Zusammensetzung nach einem der Ansprüche 1 bis 4,
wobei das Gummi mit einer Siloxanbindung ein Kern-Hülle-Gummi auf Silikon-Acryl-Basis ist, und bevorzugt ein Kern-Hülle-Gummi auf Silikon-Acryl-Basis mit einem Silikonacrylverbundgummi als Kernabschnitt und einer Pfropfschicht eines vinylbasierten Polymers als Hüllenabschnitt ist.

6. Flammhemmende Zusammensetzung nach einem der Ansprüche 1 bis 5, wobei das thermoplastische Harz PC/ABS und/oder PC/SAN enthält.

7. Flammhemmende Zusammensetzung nach einem der Ansprüche 1 bis 6,
ferner umfassend eine fluorierte Verbindung,
wobei, wenn das Gewicht der flammhemmenden Zusammensetzung als 100 Gewichtsprozent festgelegt wird, der Gehalt der fluorierten Verbindung 0,1 bis 1,0 Gewichtsprozent beträgt.

8. Flammhemmende Zusammensetzung nach einem der Ansprüche 1 bis 7,
wobei die flammhemmende Zusammensetzung der Klassifizierung UL-94 5VB entspricht.

9. Flammhemmende Zusammensetzung nach einem der Ansprüche 1 bis 8,
wobei es sich bei dem thermoplastischen Harz um ein wiedergewonnenes Harz handelt.

10. Formgegenstand, der durch Formen der flammhemmenden Zusammensetzung nach einem der Ansprüche 1 bis 9 erhalten wird.

11. Bilderzeugungsvorrichtung, umfassend:
ein lichtempfindliches Element, und
ein Gehäuse, das das lichtempfindliche Element aufnimmt,
wobei das Gehäuse den Formgegenstand nach Anspruch 10 enthält.

12. Verfahren zum Herstellen einer flammhemmenden Zusammensetzung, umfassend:
Mischen eines thermoplastischen Harzes, einer Cellulose, und eines flammhemmenden Mittels,
wobei das Mischen so durchgeführt wird, dass, wenn das Gewicht der flammhemmenden Zusammensetzung als 100 Gewichtsprozent festgelegt wird, der Gehalt des thermoplastischen Harzes 50 bis 90 Gewichtsprozent beträgt, der Gehalt der Cellulose 1 bis 30 Gewichtsprozent beträgt, und der Gehalt des flammhemmenden Mittels 5 bis 20 Gewichtsprozent beträgt;
**dadurch gekennzeichnet, dass**
ferner ein Gummi mit einer Siloxanbindung mit dem thermoplastischen Harz, der Cellulose und dem flammhemmenden Mittel gemischt wird, wobei das Mischen derart durchgeführt wird, dass, wenn das Gewicht der flammhemmenden Zusammensetzung als 100 Gewichtsprozent festgelegt wird, der Gehalt des Gummis mit einer Siloxanbindung 3 bis 20 Gewichtsprozent beträgt.

13. Verfahren zum Herstellen einer flammhemmenden Zusammensetzung nach Anspruch 12,
ferner umfassend Mischen einer fluorierten Verbindung mit dem thermoplastischen Harz, der Cellulose, dem Gummi mit einer Siloxanbindung und dem flammhemmenden Mittel,
wobei, wenn das Gewicht der flammhemmenden Zusammensetzung als 100 Gewichtsprozent festgelegt wird, das Mischen derart durchgeführt wird, dass der Gehalt der fluorierten Verbindung in der flammhemmenden Zusammensetzung 0,1 bis 1,0 Gewichtsprozent beträgt.

14. Verfahren zum Herstellen einer flammhemmenden Zusammensetzung nach Anspruch 12 oder 13,
wobei das Mischen des thermoplastischen Harzes, der Cellulose, des Gummis mit einer Siloxanbindung und des flammhemmenden Mittels durch eine Knetmaschine durchgeführtes Schmelzkneten ist.

15. Verfahren zum Herstellen eines Formgegenstands, umfassend:
Herstellen einer flammhemmenden Zusammensetzung; und
Formen der flammhemmenden Zusammensetzung,
wobei die flammhemmende Zusammensetzung mittels des Verfahrens zum Herstellen einer flammhemmenden Zusammensetzung nach einem der Ansprüche 12 bis 14 hergestellt wird.

16. Verfahren zum Herstellen eines Formgegenstands nach Anspruch 15, wobei das Formen Extrusions- oder Spritzgießen ist.

## Revendications

1. Composition de retardateur de flamme comprenant :
une résine thermoplastique ;
une cellulose ; et
un agent retardateur de flamme ;
dans laquelle quand le poids de la composition de retardateur de flamme est établi à 100 pour cent en poids,
la teneur de la résine thermoplastique est de 50 à 90 pour cent en poids,
la teneur de la cellulose est de 1 à 30 pour cent en poids, et
la teneur de l'agent retardateur de flamme est de 5 à 20 pour cent en poids ;
**caractérisée** comme comprenant en outre :
un caoutchouc ayant une liaison siloxane, où, quand le poids de la composition de retardateur de flamme est établi à 100 pour cent en poids, la teneur du caoutchouc ayant une liaison siloxane est de 3 à 20 pour cent en poids.

2. Composition de retardateur de flamme selon la revendication 1, dans laquelle une surface de la cellulose est traitée par un traitement de couplage à un silane.

3. Composition de retardateur de flamme selon la revendication 1 ou 2, dans laquelle, quand le poids de la composition de retardateur de flamme est établi à 100 pour cent en poids, la teneur de la cellulose est de 3 à 15 pour cent en poids.

4. Composition de retardateur de flamme selon l'une quelconque des revendications 1 à 3, dans laquelle, quand le poids de la composition de retardateur de flamme est établi à 100 pour cent en poids, la teneur du caoutchouc ayant une liaison siloxane est de 5 à 15 pour cent en poids.

5. Composition de retardateur de flamme selon l'une quelconque des revendications 1 à 4, dans laquelle le caoutchouc ayant une liaison siloxane est un caoutchouc coeur-enveloppe à base d'acrylique-silicone, et de préférence est un caoutchouc coeur-enveloppe à base d'acrylique-silicone qui a un caoutchouc composite acrylique-silicone comme partie de coeur et une couche de greffe d'un polymère à base de vinyle comme partie d'enveloppe.

6. Composition de retardateur de flamme selon l'une quelconque des revendications 1 à 5, dans laquelle la résine thermoplastique comprend au moins un de PC/ABS et de PC/SAN.

7. Composition de retardateur de flamme selon l'une quelconque des revendications 1 à 6, comprenant en outre un composé fluoré,
dans laquelle, quand le poids de la composition de retardateur de flamme est établi à 100 pour cent en poids, la teneur du composé fluoré est de 0,1 à 1,0 pour cent en poids.

8. Composition de retardateur de flamme selon l'une quelconque des revendications 1 à 7, la composition de retardateur de flamme étant notée comme UL-94 5VB.

9. Composition de retardateur de flamme selon l'une quelconque des revendications 1 à 8, dans laquelle la résine thermoplastique est une résine recouverte.

10. Article moulé obtenu en moulant la composition de retardateur de flamme selon l'une quelconque des revendications 1 à 9.

11. Appareil de formation d'image comprenant :
un élément photosensible ; et
un logement accommodant l'élément photosensible,
où le logement comprend l'article moulé selon la revendication 10.

12. Procédé de fabrication d'une composition de retardateur de flamme, le procédé comprenant :
le mélange d'une résine thermoplastique, d'une cellulose et d'un agent retardateur de flamme,
dans lequel le mélange est effectué de sorte que, quand le poids de la composition de retardateur de flamme est établi à 100 pour cent en poids, la teneur de la résine thermoplastique est de 50 à 90 pour cent en poids, la teneur de la cellulose est de 1 à 30 pour cent en poids, et la teneur de l'agent retardateur de flamme est de 5 à 20 pour cent en poids ;
**caractérisé par** :
le mélange en outre d'un caoutchouc ayant une liaison siloxane avec la résine thermoplastique, la cellulose et l'agent retardateur de flamme, où le mélange est effectué de sorte que, quand le poids de la composition de retardateur de flamme est établi à 100 pour cent en poids, la teneur du caoutchouc ayant une liaison siloxane est de 3 à 20 pour cent en poids.

13. Procédé de fabrication d'une composition de retardateur de flamme selon la revendication 12, comprenant en outre le mélange d'un composé fluoré avec la résine thermoplastique, la cellulose, le caoutchouc ayant une liaison siloxane, et l'agent retardateur de flamme,
où, quand le poids de la composition de retardateur de flamme est établi à 100 pour cent en poids, le mélange est effectué de sorte que la teneur du composé fluoré dans la composition de retardateur de flamme est de 0,1 à 1,0 en poids.

14. Procédé de fabrication d'une composition de retardateur de flamme selon la revendication 12 ou 13, dans lequel le mélange de la résine thermoplastique, de la cellulose, du caoutchouc ayant une liaison siloxane et de l'agent retardateur de flamme est effectué par malaxage à l'état fondu par une machine de malaxage.

15. Procédé de fabrication d'un article moulé, le procédé comprenant :
la préparation d'une composition de retardateur de flamme ; et
le moulage de la composition de retardateur de flamme,
où la composition de retardateur de flamme est fabriquée par le procédé de fabrication d'une composition de retardateur de flamme selon l'une quelconque des revendications 12 à 14.

16. Procédé de fabrication d'un article moulé selon la revendication 15, dans lequel le moulage est un moulage par extrusion ou un moulage par injection.
